Europäisches Patentamt

European Patent Office

Office européen des brevets

(19)

(11) Veröffentlichungsnummer: **0 498 280 B1**

(12) **EUROPÄISCHE PATENTSCHRIFT**

(45) Veröffentlichungstag der Patentschrift: **20.12.95**

(51) Int. Cl.⁶: **G02B 26/10**

(21) Anmeldenummer: **92101409.8**

(22) Anmeldetag: **29.01.92**

(54) **Vorrichtung zum Abtasten eines Objekts**

(30) Priorität: **04.02.91 DE 4103298**

(43) Veröffentlichungstag der Anmeldung:
**12.08.92 Patentblatt 92/33**

(45) Bekanntmachung des Hinweises auf die
Patenterteilung:
**20.12.95 Patentblatt 95/51**

(84) Benannte Vertragsstaaten:
**AT BE CH DE DK ES FR GB GR IT LI LU NL PT
SE**

(56) Entgegenhaltungen:
**EP-A- 0 273 887
WO-A-90/00025
US-A- 4 318 582
US-A- 5 048 904**

(73) Patentinhaber: **HEIDELBERG ENGINEERING
OPTISCHE MESSSYSTEME GmbH
Im Neuenheimer Feld 519
D-69120 Heidelberg (DE)**

(72) Erfinder: **Zinser, Gerhard, Dr.
Hasenstrasse 21
W-6720 Speyer (DE)**

(74) Vertreter: **Klose, Hans, Dipl.-Phys. et al
Patentanwälte
Klose & Schmitt,
Kurfürstenstrasse 32
D-67061 Ludwigshafen (DE)**

EP 0 498 280 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung bezieht sich auf eine Vorrichtung zum Abtasten eines Objektes gemäß den im Oberbegriff des Patentanspruchs 1 angegebenen Merkmalen.

Eine Abtastvorrichtung ist aus der PCT-Anmeldung WO 90/00025 bekannt und enthält eine Lichtquelle, die auf ein abzubildendes Objekt fokussierbar ist. Mittels einer Abtasteinrichtung kann der Fokus des Lichtstrahl dreidimensional über das Objekt geführt werden und mittels einer Detektionseinrichtung kann das in jedem Punkt vom Objekt reflektierte Licht registriert werden. Es sind zwei Scanner oder strahlablenkende Elemente zur Abtastung in zwei Richtungen vorhanden. Im Strahlengang zwischen den genannten strahlenablenkenden Mitteln ist eine Anordnung aus mindestens zwei abbildenden optischen Elementen vorgesehen, die zur Änderung des horizontalen Ablenkwinkels austauschbar ist. Derartige optische Elemente zwischen den beiden strahlablenkenden Elementen erfordern einen nicht unerheblichen Raumbedarf. Unabhängig von der jeweiligen Ausgestaltung sind grundsätzlich für eine optisch einwandfreie Abtastung derartige zusätzliche optische Elemente erforderlich, wenn die Abtastung in den beiden Richtungen mittels zwei strahlablenkenden Elementen, welche nachfolgend als Scanner bezeichnet werden, vorgenommen wird. Der Vollständigkeit halber sei angemerkt, daß die Abtastung in zwei Richtung auch mittels eines in zwei Achsen bewegbaren Scanners durchgeführt werden könnte. Dies ist jedoch bei hohen Abtastgeschwindigkeiten nicht realisierbar, wenn die schnelle Abtastung beispielsweise durch einen resonanten Scanner oder einen Polygonspiegel ausgeführt wird.

Ferner ist aus dem US-Patent 4 318 582 eine Vorrichtung zum zweidimensionalen Abtasten bekannt, welche einen ersten Polygonspiegel aufweist. Das von der Lichtquelle auf den Polygonspiegel auftreffende und von diesem reflektierte Licht gelangt über ein Linsensystem zu dem zweiten Spiegel, welcher um eine zur Drehachse des Polygonspiegels senkrechte Achse gleichfalls drehbar bzw. schwenkbar ist. Von diesem zweiten Spiegel werden die Lichtstrahlen auf ein Objekt reflektiert und von diesem wieder reflektiert. Das Objekt ist in einer Ebene angeordnet, zu welcher die Achse des ersten Polygonspiegels orthogonal und die Achse des zweiten Spiegels im wesentlichen parallel ausgerichtet ist. Mittels geeigneten Prozessoren und Steuereinrichtungen werden die beiden Spiegel synchronisiert, um das plane Objekt zeilenweise in den beiden zueinander senkrechten Richtungen abzutasten. Da die beiden Drehpunkte der Abtastbewegungen in den beiden Richtungen räumlich voneinander getrennt sind, trifft ein Lichtstrahl nach der Reflexion am ersten Spiegel den zweiten Spiegel grundsätzlich nicht immer exakt an der gleichen Stelle. Es ist daher das genannte Linsensystem zwischen den beiden Drehspiegeln notwendig, mit welchem der erste Spiegel auf dem zweiten Spiegel abgebildet wird, um die Bewegung des Lichtstrahles auf den zweiten Spiegel zu reduzieren. Abgesehen davon, daß das Linsensystem einen zusätzlichen Bauaufwand und eine Vergrößerung der Anordnung erfordert, führt das Linsensystem selbst zu Abbildungsfehlern. Insbesondere für größere Abtastwinkel weist das Abtastsystem vergleichsweise große Abmessungen auf.

Schließlich ist aus dem DDR-Patent 266 664 eine optische Abtastvorrichtung mit zwei Spiegeln bekannt, welche bei der Beleuchtung eines Objektes oder der Detektierung von Lichtstrahlen zusammenwirken, welche von dem Objekt reflektiert oder emittiert werden. Einer dieser Spiegel ist in der Nähe der Pupille des Gerätes positioniert. Der andere Spiegel ist an einer Stelle zur Ausrichtung des übertragenden Lichtes auf den erstgenannten Spiegel oder an einer Stelle zum Empfang des Lichtes angeordnet, welches von dem erstgenannten Spiegel reflektiert oder emittiert wird. Diese Anordnung kann als Abtastvorrichtung ausgebildet sein, wobei der erstgenannte Spiegel um eine Achse rotiert, welche senkrecht zur Symmetrieachse des Gerätes steht. Die Achse des zweiten Spiegels verläuft senkrecht zu der des ersten Spiegels, wobei der Abstand der sich gegenseitig schneidenden Achsen gleich groß ist wie der mittlere Abstand zwischen den Zentren der beiden Spiegel. Zwischen den beiden Spiegeln ist kein optisches Linsensystem vorgesehen, doch die Bewegung der Lichtstrahlen auf den beiden Spiegeln bedingt eine entsprechende Vergrößerung der Spiegel. Vor allem größere Bewegungen des Lichtstrahles auf dem ersten Spiegel treten nachteilige Abbildungsfehler auf. Die durch die Bewegung des Lichtstrahles auf den Spiegeln bedingten Fehler sind für den Abtastvorgang nachteilig, zumal diese mit zunehmender Bewegung und Abtastwinkeln anwachsen.

Hiervon ausgehend liegt daher der Erfindung die Aufgabe zugrunde, die Vorrichtung der genannten Art dahingehend auszubilden, daß bei kompakter Bauweise ein optisch einwandfreier Abtastvorgang gewährleistet wird. Es soll ein zweidimensionales Abtastsystem geschaffen werden, welches keine optische Abbildung mit Linsen zwischen den beiden Scannspiegeln erfordert und gleichzeitig optische Abbildungsfehler vermeidet. Die Vorrichtung soll eine einfache und funktionssichere Konstruktion aufweisen und hohe Abtastgeschwindigkeiten, insbesondere durch den Einsatz von resonanten Scannern und Polygonspiegeln, ermöglichen.

Die Lösung dieser Aufgabe erfolgt gemäß den im Kennzeichen des Patentanspruchs 1 angegebenen Merkmalen.

Die erfindungsgemäße Vorrichtung zeichnet sich durch eine kompakte Bauweise aus und gewährleistet einen optisch einfachen Abtastvorgang. Es gelangen zwei Scanner derart zum Einsatz, daß der Spiegel des ersten Scanners zu dessen Drehachse einen Abstand aufweist und der Drehpunkt und/oder das Zentrum des Spiegels des zweiten Scanners auf der Mitte des genannten Abstandes zwischen der Drehachse und dem Spiegel des ersten Scanners positioniert ist. Es ist ein konfokales Laserabtastsystem geschaffen, bei welchem der erste Spiegel quer zur Drehachse des ersten Scanners beabstandet angeordnet ist. Der erste Spiegel ist zweckmäßig im wesentlichen parallel zur Drehachse des ersten Scanners angeordnet, wobei die von einer Strahlenquelle, insbesondere einem Laser, ausgesandten Strahlen in einem Bereich um das Zentrum des Spiegels auftreffen. Dieser Bereich ist abhängig von der Größe der Auslenkung des ersten Spiegels. Zwischen der Strahlenquelle und dem ersten Spiegel ist ein teillichtdurchlässiges Ablenkelement, beispielsweise ein halbtransparenter Spiegel angeordnet, um die vom Objekt über den zweiten auf den ersten Spiegel reflektierten Strahlen einer Auswerteinrichtung zuzuführen. Die vom zweiten Spiegel auf den ersten Spiegel reflektierten Strahlen gelangen gleichfalls auf den Bereich, welcher das Zentrum des ersten Spiegels umgibt. Entsprechend ist der zweite Spiegel angeordnet, daß die Strahlen in einen Bereich nahe des Zentrums auftreffen bzw. reflektiert werden. Entsprechend der Auslenkung des ersten Spiegels erfolgt eine Abtastung des Objekts in der einen Richtung und entsprechend der Auslenkung des zweiten Spiegels erfolgt eine Abtastung des Objekts in einer zweiten Richtung. Die Spiegel und deren Drehachsen sind in der Weise angeordnet, daß die Abtastrichtungen zweckmäßig im wesentlichen orthogonal zueinander verlaufen. Im Rahmen der Erfindung können die Abtastrichtungen bedarfsweise auch hiervon abweichende Winkellagen einnehmen. Die Drehachsen der beiden Scanner verlaufen in zueinander im wesentlichen orthogonalen Ebenen. Die Drehachsen stehen im wesentlichen orthogonal zueinander und schneiden einander jedoch nicht. Die Drehachse des zweiten Scanners verläuft im wesentlichen durch das Zentrum des zweiten Spiegels, wobei die Ebene des Spiegels im wesentlichen parallel zu dieser Drehachse angeordnet ist. Bedarfsweise können der erste und der zweite Spiegel in Ebenen angeordnet sein, welche zur Drehachse des jeweiligen Scanners um einen kleinen Winkel geneigt liegt, um so auch andere als orthogonale Abtastrichtungen im Objekt vorzugeben. Aufgrund der parallelen Ausrichtung der Spiegel zu den zugeordneten Drehachsen sowie die orthogonale Ausrichtung der Drehachsen zueinander erfolgt die zweckmäßige Abtastung des Objekts in zwei orthogonalen Richtungen.

Der erste Spiegel des ersten Scanners ist aus der Drehachse verschoben angeordnet, während das Zentrum des Spiegels des zweiten Scanners in der Mitte zwischen der Drehachse und dem Spiegel des ersten Scanners positioniert ist. Durch die erfindungsgemäße Anordnung werden die Bewegungen des Lichtstrahles auf dem ersten Spiegel relativ zum Spiegelzentrum sowie die Bewegung des Lichtstrahls auf dem zweiten Spiegel relativ zum Spiegelzentrum auf ein Minimum reduziert. Die Spiegel können daher sehr kleine Abmessungen aufweisen und die durch die Bewegung der Strahlen auf den Spiegeln bedingten Fehler während der Abtastung werden ohne optische Zwischenabbildung sehr klein gehalten. Aufgrund dieser besonderen Anordung ist die eingangs erläuterte optische Zwischenabbildung nicht erforderlich, und das Bauvolumen kann gegenüber vorbekannten Vorrichtungen wesentlich reduziert werden. Der apparative Aufwand ist auf ein Minimum reduziert, und eine mechanische Kopplung der beiden Scanner ist nicht erforderlich.

Bei dem erfindungsgemäßen konfokalen Abtastsystem ist die Fokalebene des Abtastvorganges bezüglich des Objektes, insbesondere in diesem verschiebbar, so daß insgesamt eine dreidimensionale Abtastung durchführbar ist. Die Strahlquelle, insbesondere die Laserquelle, ist auf das abzubildende Objekt fokussierbar, wobei die Abtastbewegung in die Eintrittspupille abgebildet wird, welche dem Objekt und beispielsweise einer Linse zugeordnet ist. Durch die erfindungsgemäße Anordnung treffen die Strahlen weitgehend unabhängig von den Abtast- bzw. Scannwinkeln in das jeweilige Zentrum der beiden Spiegel. Die hierdurch erreichte scharfe Abbildung des Objekts ergibt eine hohe Signaldichte.

In einer besonderen Ausgestaltung ist die Abtasteinheit für die dritte Richtung in der Weise ausgebildet, daß die Abbildungslinsen ortsfest angeordnet und das übrige Abtastsystem verschoben wird. Hierdurch kann die Fokalebene des Abtastvorganges im Objekt verschoben werden. In dieser besonderen Ausgestaltung wird die Zwischenbildebene verschoben. Ohne zusätzliche optische Elemente wird auch im defokussierten Zustand ein optisch einwandfreier Strahlengang erreicht.

Die erfindungsgemäße Vorrichtung enthält eine Strahlenquelle, welche auf das abzubildende Objekt fokussierbar ist, die Abtasteinrichtung, mittels welcher der Fokus des Lichtstrahl dreidimensional über das Objekt geführt wird, sowie die Detektionseinrichtung, die das in jedem Punkt vom Objekt reflektierte Licht registriert. Der konfokale Aufbau gewährleistet eine hohe optische Auflösung auch parallel zur optischen Achse. Mittels den beiden Spiegeln bzw. Doppelscannern erfolgt die Abtastung in den beiden im wesentlichen orthogonalen Richtungen. Für die dritte zu der vorstehend genannten Abtastebene ist die Verschiebung der Zwischenbildebene vorgesehen.

In einer besonderen Ausgestaltung gelangt die erfindungsgemäße Vorrichtung zur Messung von Entfernungen zum Einsatz. Hierbei wird die Tatsache genutzt, daß aufgrund der erfindungsgemäßen scharfen Abbildung des Objekts eine hohe Signaldichte erreicht wird. Vor oder hinter dem Objekt ist die Signaldichte wesentlich niedriger. Aus den optischen Daten der Anordnung wird in Verbindung mit dem Fokusabstand die Entfernung zu dem Objekt errechnet. Diese Vorrichtung weist einen kompakten Aufbau auf und ermöglicht zuverlässig die Entfernungsmessung, wobei die in der Auswerteinrichtung erfaßte maximale signaldichte des abgebildeten Objekts als Kriterium zur Berechnung der Entfernung unter Zugrundelegung des eingestellten Fokusabstandes erreichnet wird.

Weitere besondere Ausgestaltungen und Vorteile sind in den Unteransprüchen und der nachfolgenden Beschreibung eines Ausführungsbeispiels angegeben.

Die Erfindung wird nachfolgend anhand der Zeichnung näher erläutert. Es zeigen:

Fig. 1     eine Prinzipdarstellung der Vorrichtung,

Fig. 2     eine Prinzipdarstellung der Vorrichtung gemäß Fig. 1 in Blickrichtung II,

Fig. 3     eine Darstellung zur Erläuterung der Funktionsweise,

Fig. 4     eine schematische Darstellung zur Verschiebung der Fokalebene im Objekt.

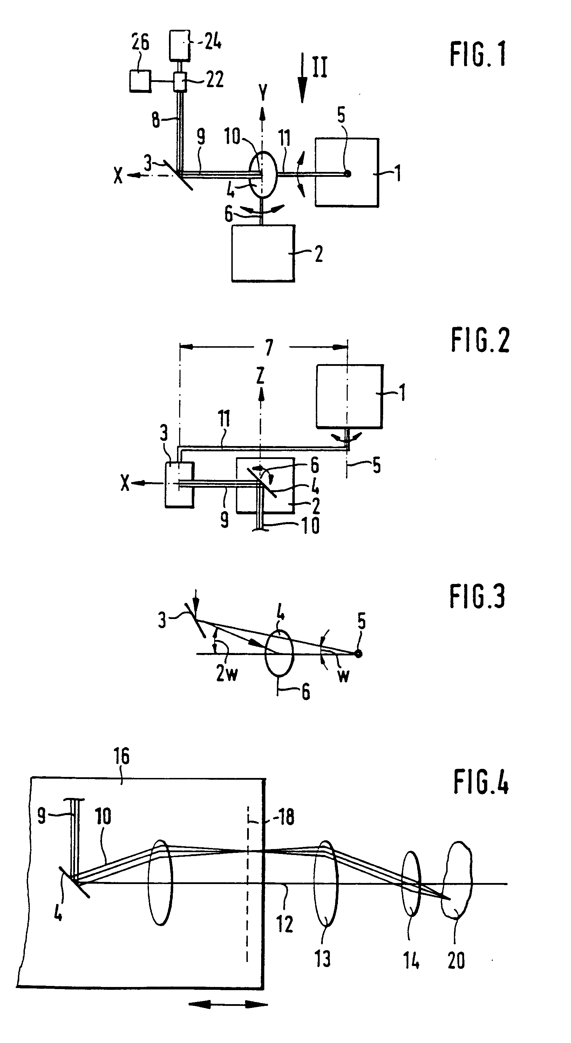

Fig. 1 zeigt schematisch einen ersten Scanner 1 und einen zweiten Scanner 2. Mit dem ersten Scanner 1 ist ein erster Spiegel 3 mechanisch gekopppelt und um eine zur Zeichenebene senkrechte Achse 5 schwenkbar angeordnet. Dem zweiten Scanner 2 ist ein zweiter Spiegel 4 zugeordnet, welcher um eine zur Zeichenebene parallele Achse 6 schwenkbar ist. Die Achsen 5 und 6 verlaufen in zueinander orthogonalen Ebenen und stehen senkrecht zueinander. Wesentlich ist, daß der erste Spiegel 3 bezüglich des Scanners 1 in einem Abstand 7 angeordnet ist und ferner die Drehachse 6 des Scanners 2 in der Mitte zwischen der Drehachse des Scanners 1 und dem Spiegel 3 verläuft. Das Zentrum des zweiten Spiegels 4 befindet sich erfindungsgemäß auf dem halben Abstand zwischen dem Zentrum des ersten Spiegels 3 und der Drehachse 5 des ersten Scanners 1. Die Drehachse 5 des ersten Spiegels 3 verläuft im wesentlichen parallel zur Spiegelebene, wobei jedoch der Abstand 7 zwischen dem Zentrum des ersten Spiegels 3 und der Drehachse 5 vorhanden ist. Auch die Drehachse 6 des zweiten Spiegels 4 verläuft im wesentlichen parallel zu diesem. Die Drehachse 6 verläuft ferner im wesentlichen durch das Zentrum des zweiten Spiegels, wobei jedoch bedarfsweise auch ein Abstand vorgegeben werden kann. Maßgebend ist, daß das Zentrum des zweiten Spiegels um den halben Abstand 7 von der Drehachse 5 angeordnet ist. Zwischen den beiden Spiegeln 3 und 4 sind keine Linsen oder optische Abbildungsmittel vorhanden und innerhalb der Vorrichtung gelangen somit die Strahlen 9 direkt von dem einen Spiegel zum anderen. Schematisch sind Strahlen 8 angedeutet, welche von bzw. zu einer Einrichtung 22 zur Auskopplung der Strahlen gelangen. Die Strahlen einer Strahlenquelle 24, insbesondere eines Lasers, gelangen zunächst zu dieser Einrichtung und von dort zu der Vorrichtung gemäß Fig. 1 und weiter zu dem Objekt. Die vom Objekt reflektierten Strahlen gelangen wiederum über die erfindungsgemäße Vorrichtung und von dieser zu der Auskopplungseinrichtung 22, welche sie dann einer Auswerteinrichtung bzw. einem Detektor 26 zur weiteren Auswertung zuführt. Die zum Objekt ausgesendeten bzw. vom Objekt reflektierten Strahlen 10 verlaufen im wesentlichen orthogonal zu der Ebene, in welcher die Strahlen 8 und 9 verlaufen.

Es sei davon ausgegangen, daß ein orthogonales Achsensystem mit seinem Ursprungspunkt im Zentrum des zweiten Spiegels 4 liegt, wobei die X-Y-Ebene mit der Zeichenebene übereinstimmt. Die Strahlen 8 verlaufen parallel zur Y-Richtung, während die Strahlen 9 zwischen den beiden Spiegeln 3, 4 entlang der X-Richtung verlaufen. Die Drehachse 6 des zweiten Scanners liegt in der Y-Richtung, während die Drehachse 5 orthogonal zur X-Y-Ebene steht.

Fig. 2 zeigt eine Ansicht der Vorrichtung aus Fig. 1 in Blickrichtung II, wobei die Achse 5 in der Zeichenebene und die Achse 6 senkrecht zur Zeichenebene verlaufen. Der Spiegel 3 ist mit dem Scanner 1 über einen Arm 11 verbunden und weist somit zur Drehachse 5 den Abstand 7 auf. Die Zeichenebene entspricht der X-Z-Ebene des Koordinatensystems mit Ursprung im Zentrum des zweiten Spiegels 4. Die vom zweiten Spiegel 4 reflektierten bzw. vom Objekt auf den Spiegel 4 zurückgesandten Strahlen 10 verlaufen in der Z-Richtung. Die Drehachse bzw. der Drehpunkt des zweiten Spiegels 4 bzw. des zweiten Scanners 2 liegt in der Mitte zwischen der Drehachse 5 und dem Drehpunkt des Spiegels 3. Es sind hier auch die Strahlen 10 angedeutet, welche vom Spiegel 4 zum Objekt ausgesandt bzw. wieder reflektiert werden. Die von der Auskopplungseinrichtung zum Spiegel 3 des ersten Scanners gelangenden bzw. von jenem reflektierten Strahlen 8 verlaufen orthogonal nach vorn vor die Zeichenebene.

Anhand von Fig. 3 wird die Grundlagen der Funktionsweise der in Fig. 1 dargestellten Vorrichtung erläutert. Wird der Scanner 1 um einen Winkel w ausgelenkt, so fällt aufgrund der erfindungsgemäßen Anordnung der Lichtstrahl unter dem Winkel 2w auf den Drehpunkt des Spiegels 4 des zweiten Scanners 2. Dies gilt für vergleichsweise kleine Winkel w in der Größenordnung von einigen Winkelgraden bis maximal 10 oder 5 Winkelgrade. Die Stelle, an welcher der Strahl 9 auf den Spiegel 4 trifft, sollte normalerweise der Mittelpunkt des Spiegels 4 sein und vom Scannwinkel w unabhängig sein.

Bei der erfindungsgemäßen Vorrichtung ändert sich die Auftreffstelle entlang der Scannachse mit dem Winkel w um eine Größe g nach folgender Gleichung:

$$g = \frac{s}{2} \times w^2(1-w)$$

Hierbei der entspricht Parameter s dem Abstand 7. Im Rahmen dieser Erfindung ist der Abstand 7 bzw. der Parameter s näherungsweise 20mm groß und für einen Scannwinkel $w = \pm 5°$ ergibt sich folglich eine sehr kleine Änderung von 0 bis 0,08 mm. Infolge der erfindungsgemäßen Anordnung des zweiten Spiegels 4 in der Mitte zwischen dem ersten Scanner 1 und dem Spiegel 3 haben beide Abtastbewegungen denselben Drehpunkt, nämlich den Drehpunkt des zweiten Spiegels 4 des zweiten Scanners 2. Es ist hierbei weder eine optische Zwischenabbildung noch eine mechanische Kopplung der beiden Scanner erforderlich.

Eine besondere Ausgestaltung der Erfindung, und zwar zur Abtastung in der dritten Richtung, welche auch als z-Richtung bezeichnet wird, wird anhand von Fig. 4 erläutert. Zunächst sei festgehalten, daß zur Verschiebung der Fokalebene des Abtastvorgangs im Objekt einerseits der Abstand zwischen dem Abtastsystem und dem Objekt, insbesondere durch Bewegung des Objektes unter der Linse des Abtastsystems oder die Divergenz des abtastenden Strahles verändert werden kann. Für den Fall, daß der Abstand zwischen der letzten Linse und dem Objekt nicht verändert ist, wie es beispielsweise bei der Untersuchung des hinteren Augenabschnittes der Fall ist, kann die Divergenz des abtastenden Strahles verändert werden. Dies erfolgt üblicherweise durch Verwendung eines zusätzlichen Linsensystems oder durch Verschiebung einer der beiden Linsen, welche den Drehpunkt der Abtastbewegung in die Eintrittspupille des Systems aus Linse 14 und Objekt 20 abbilden. Ein zusätzliches Linsensystem erfordert zusätzliche optische Elemente und einen entsprechenden Raumbedarf, während die Verschiebung der Abbildungslinse zu Abbildungsfehlern führt, da die Drehpunkte des Abtastvorganges, also die Scannpupillen, verschoben werden. Gemäß der erfindungsgemäßen Ausgestaltung werden die beiden letzten Linsen 13, 14 zueinander und bezüglich des Objektes 20 ortsfest gehalten und das übrige Abtastsystem 16 wird in der dritten Richtung entlang der Achse 12 verschoben. Mit den genannten Linsen 13 und 14 wird der Drehpunkt der Abtastbewegung in die Eintrittspupille des Systems aus der Linse 14 und dem Objekt 20 abgebildet. Hierdurch wird die Zwischenbildebene 18 verschoben und auch im defokussierten Zustand wird ein optisch einwandfreier Strahlengang ohne zusätzliche Elemente gewährleistet. Die Abstände zwischen den Linsen 13 und 14 sowie zum Objekt 20 bleiben unverändert. Der Einfachheit halber ist von dem eingangs erläuterten Abtastsystem 4 nur der zweite Spiegel 4 dargestellt und es sei festgehalten, daß aufgrund der kompakten Bauweise des Abtastsystems dessen Verschiebung und damit die vorgeschlagene Kombination hinsichtlich der ortsfesten Zuordnung der beiden letzten Linsen und des Objektes in besonders zweckmäßiger Weise ermöglichen wird.

### Bezugszeichen

| | | |
|---|---|---|
| 1 | | erster Scanner |
| 2 | | zweiter Scanner |
| 3 | | erster Spiegel |
| 4 | | zweiter Spiegel |
| 5, 6 | | Achse |
| 7 | | Abstand |
| 8, 9, 10 | | Strahlen |
| 11 | | Arm |
| 12 | | Achse |
| 13, 14 | | Linse |
| 16 | | Abtastsystem |
| 18 | | Zwischenbildebene |
| 20 | | Objekt |
| 22 | | Einrichtung |
| 24 | | Strahlenquelle |
| 26 | | Detektor |

### Patentansprüche

1. Vorrichtung zum Abtasten eines Objekts mit einem Strahlenbündel in zwei, insbesondere orthogonalen Richtungen, enthaltend einen ersten und einen zweiten Scanner (1, 2) mit jeweils einem Spiegel (3, 4), deren Drehachsen (5, 6) in zueinander im wesentlichen orthogonalen Ebenen verlaufen, wobei in einer Null-Lage des Spiegels (3) des ersten Scanners (1) das von diesem Spiegel (3) reflektierte Strahlenbündel das Zentrum des Spiegels (4) des zweiten Scanners (2) trifft und wobei das Zentrum des Spiegels (3) des ersten Scanners (1) zu seiner Drehachse (5) in einem Abstand (7) angeordnet ist,

dadurch gekennzeichnet, daß das Zentrum des Spiegels (4) des zweiten Scanners (2) in der Mitte des genannten Abstandes (7) zwischen der Drehachse (5) und dem Zentrum des Spiegels (3) des ersten Scanners (1) angeordnet ist.

2. Vorrichtung nach Anspruch 1, dadurch gekennzeichnet, daß vom ersten Spiegel (3) die Strahlen (9) direkt zum zweiten Spiegel (10) verlaufen, und zwar ohne optische Mittel zur Ablenkung.

3. Vorrichtung nach Anspruch 1, dadurch gekennzeichnet, daß der erste Spiegel (3) des ersten Scanners (1) nur um kleine Winkel in der Größenordnung von einigen Winkelgraden, max. bis 10 Winkelgrade, bevorzugt bis 5 Winkelgrade, ausgelenkt wird.

4. Vorrichtung nach einem der Ansprüche 1 bis 3, dadurch gekennzeichnet, daß der erste Spiegel (3) des ersten Scanners (1) mit diesem über einen Arm (11) gekoppelt ist, dessen Länge im wesentlichen gleich groß wie der Abstand (7) ist.

5. Vorrichtung nach einem der Ansprüche 1 bis 4, dadurch gekennzeichnet, daß die Strahlen (8), welche auf dem ersten Spiegel (3) von einer Einrichtung (28) zur Strahlungsauskopplung kommen, bzw. reflektiert werden im wesentlichen senkrecht zu den Strahlen (10) stehen, welche zum Objekt (20) bzw. von diesem reflektiert werden.

6. Vorrichtung nach einem der Ansprüche 1 bis 5, dadurch gekennzeichnet, daß zur Verschiebung der Fokalebene des Abtastvorganges das ganze Abtastsystem (16) verschoben wird, wobei die beiden letzten Linsen (13, 14) zueinander sowie bezüglich des Objektes (20) ortsfest verbleiben.

7. Vorrichtung nach einem der Ansprüche 1 bis 6, dadurch gekennzeichnet, daß die von der Strahlenquelle (24), welche bevorzugt als ein Laser ausgebildet ist, ausgesandten Strahlen durch eine teillichtdurchlässige Ablenkeinrichtung (22) auf das Zentrum des ersten Spiegels (3) gelangen und daß die vom Spiegel (3) reflektierten Strahlen über die teillichtdurchlässige Ablenkeinrichtung (22) zu einer Auswerteinrichtung (26) gelangen.

8. Vorrichtung nach einem der Ansprüche 1 bis 7, dadurch gekennzeichnet, daß die Drehachse (5) des ersten Scanners (1) im wesentlichen parallel zur Ebene des ersten Spiegels (3) angeordnet ist und/oder daß die Drehachse (6) des zweiten Scanners (2) im wesentlichen parallel zur Ebene des zweiten Spiegels (4) angeordnet ist.

9. Vorrichtung nach einem der Ansprüche 1 bis 8, dadurch gekennzeichnet, daß die Drehachsen (5, 6) in zueinander orthogonalen Ebenen angeordnet sind und/oder orthogonal zueinander ausgerichtet sind.

10. Vorrichtung nach einem der Ansprüche 1 bis 9, dadurch gekennzeichnet, daß die Drehachse (6) des zweiten Scanners im wesentlichen durch das Zentrum des zweiten Spiegels (4) verläuft.

**Claims**

1. Device for scanning an object with a bundle of rays in two in particular orthogonal directions, comprising a first and a second scanner (1, 2) each with a mirror (3, 4), the axes of rotation (5, 6) of which extend in substantially mutually perpendicular planes, in which, in a zero position of the mirror (3) of the first scanner (1), the bundle of rays reflected by this mirror (3) strikes the centre of the mirror (4) of the second scanner (2) and in which the centre of the mirror (3) of the first scanner (1) is arranged at a distance (7) from its axis of rotation (5), characterised in that the centre of the mirror (4) of the second scanner (2) is arranged in the centre of the said distance (7) between the axis of rotation (5) and the centre of the mirror (3) of the first scanner (1).

2. Device according to claim 1, characterised in that the rays (9) extend directly from the first mirror (3) to the second mirror (10), without optical deflection means.

3. Device according to claim 1, characterised in that the first mirror (3) of the first scanner (1) is only deflected through a small angle of approximately a few angular degrees, a maximum of up to 10 angular degrees and, preferably up to 5 angular degrees.

4. Device according to one of claims 1 to 3, characterised in that the first mirror (3) of the first scanner (1) is coupled to the latter via an arm (11) the length of which is substantially equal to the distance (7).

5. Device according to one of claims 1 to 4, characterised in that the rays (8) from a radiation outcoupling device (28) incident on or reflected by the first mirror (3) are substantially perpendicular to the rays (10) reflected on to or by the object (20).

6. Device according to one of claims 1 to 5, characterised in that the entire scanning system (16) is shifted in order to shift the focal plane of the scanning process, the last two lenses (13, 14) remaining fixed relative to one another and to the object (20).

7. Device according to one of claims 1 to 6, characterised in that the rays emitted by the ray source (24) preferably in the form of a laser are conveyed through a partially transmitting deflection device (22) to the centre of the first mirror (3) and that the rays reflected by the mirror (3) are conveyed via the partially transmitting deflection device (22) to an evaluation device (26).

8. Device according to one of claims 1 to 7, characterised in that the axis of rotation (5) of the first scanner (1) is arranged substantially parallel to the plane of the first mirror (3) and/or that the axis of rotation (6) of the second scanner (2) is arranged substantially parallel to the plane of the second mirror (4).

9. Device according to one of claims 1 to 8, characterised in that the axes of rotation (5, 6) are arranged in mutually perpendicular planes and/or are oriented in a mutually perpendicular manner.

10. Device according to one of claims 1 to 9, characterised in that the axis of rotation (6) of the second scanner extends substantially through the centre of the second mirror (4).

**Revendications**

1. Dispositif pour balayer un objet avec un faisceau de rayons dans deux directions, en particulier orthogonales, comprenant un premier et un deuxième scanneurs (1, 2) chacun avec un miroir (3,4) dont les axes de rotation (5, 6) sont situés dans des plans sensiblement orthogonaux entre eux, le faisceau de rayons réfléchis par le miroir (3) du premier scanneur (1) dans une position neutre de ce miroir (3) arrivant au centre du miroir (4) du deuxième scanneur (2), et le centre du miroir (3) du premier scanneur (1) étant placé à une distance (7) de son axe de rotation (5), *caractérisé en ce que* le centre du miroir (4) du deuxième scanneur (2) est placé au milieu de ladite distance (7) entre l'axe de rotation (5) et le centre du miroir (3) du premier scanneur (1).

2. Dispositif selon la Revendication 1, *caractérisé en ce que*, depuis le premier miroir (3), les rayons (9) arrivent directement au deuxième miroir (4), c'est-à-dire sans moyen optique de déviation.

3. Dispositif selon la Revendication 1, *caractérisé en ce que* le premier miroir (3) du premier scanneur (1) n'est dévié que d'angles minimes, de l'ordre de grandeur de quelques degrés, au maximum 10 degrés d'angle, de préférence jusqu'à 5 degrés d'angle.

4. Dispositif selon l'une des Revendications 1 à 3, *caractérisé en ce que* le premier miroir (3) du premier scanneur (1) est couplé à celui-ci par l'intermédiaire d'un bras (11), dont la longueur est sensiblement identique à la distance (7).

5. Dispositif selon l'une des Revendications 1 à 4, *caractérisé en ce que* les rayons (8) qui arrivent sur le premier miroir (3) depuis un dispositif (28) de découplage des rayons, ou sont réfléchis, sont sensiblement perpendiculaires aux rayons (10) qui sont réfléchis vers ou depuis l'objet (20).

6. Dispositif selon l'une des Revendications 1 à 5, *caractérisé en ce que*, pour déplacer le plan focal du processus de balayage, le système de balayage (16) dans son ensemble est déplacé, les deux dernières lentilles (13, 14) restant immobiles l'une par rapport à l'autre et par rapport à l'objet (20).

7. Dispositif selon l'une des Revendications 1 à 6, *caractérisé en ce que* les rayons envoyés par la source de rayons (24), qui est conformée de préférence en laser, arrivent à travers un dispositif de déviation semi-transparent (22) au centre du premier miroir (3), et *en ce que* les rayons réfléchis par le miroir (3) arrivent par l'intermédiaire du dispositif de déviation semi-transparent (22) à un dispositif d'analyse (26).

8. Dispositif selon l'une des Revendications 1 à 7, *caractérisé en ce que* l'axe de rotation (5) du premier scanneur (1) est sensiblement parallèle au plan du premier miroir (3) et/ou *en ce que* l'axe de rotation (6) du deuxième scanneur (2) est sensiblement parallèle au plan du deuxième miroir (4).

**9.** Dispositif selon l'une des Revendications 1 à 8, *caractérisé en ce que* les axes de rotation (5, 6) sont situés dans des plans orthogonaux entre eux et/ou sont orientés orthogonalement l'un à l'autre.

**10.** Dispositif selon l'une des Revendications 1 à 9, *caractérisé en ce que* l'axe de rotation (6) du deuxième scanneur passe sensiblement par le centre du deuxième miroir (4).

FIG.1

FIG.2

FIG.3

FIG.4